# EUROPEAN PATENT SPECIFICATION

(11) **EP 1 765 905 B1**
(45) Date of publication and mention of the grant of the patent: **19.11.2008**
(21) Application number: 05812010.6
(22) Date of filing: 23.06.2005
(51) Int. Cl.: C08G 18/58, C08G 59/50, C09D 163/00

(54) **FLEXIBLE, IMPACT RESISTANT PRIMER**
FLEXIBLES, SCHLAGFESTES GRUNDIERMITTEL
APPRET FLEXIBLE ET RESISTANT AUX CHOCS

(30) Priority: 28.06.2004 US 879564
(43) Date of publication of application: 28.03.2007
(73) Proprietor: PRC-DESOTO INTERNATIONAL, INC., Glendale, CA 91203 (US)
(72) Inventor: MORKUNAS, Bernard, T., Thousand Oaks, CA 91360 (US); SAWANT, Suresh, G., Stevenson Ranch, CA 91381 (US); WALKER, John, A., deceased (US); OMAR, Ayman, A., Canyon Country, CA 91387 (US)
(74) Representative: Polypatent
(86) International application number: PCT/US2005/022593
(87) International publication number: WO 2006/025928

(56) References cited:
- WO-A-20/04033523
- US-A- 4 520 144
- PATENT ABSTRACTS OF JAPAN vol. 1996, no. 07, 31 July 1996 (1996-07-31) & JP 08 060047 A (KANSAI PAINT CO LTD), 5 March 1996 (1996-03-05)

## Description

### FIELD OF THE INVENTION

The present invention relates to an improved epoxy-amine containing primer.

### BACKGROUND INFORMATION

Epoxy-amine coatings, particularly those that contain chromate, are used in the aircraft industry as primers for paints. The primer provides an intermediate layer that forms a strong bond with the metallic surface, which is usually aluminum, and provides an outer surface to which topcoats will bond strongly. In addition to the adhesion to the topcoat, the primer also serves to resist corrosion of the underlying metal. This corrosion resistance includes not only the capacity to protect the metal surface covered by the primer, but also the capacity to extend the protection beyond the edge of the primer coating and prevent adjacent uncoated surfaces from corroding. This is particularly relevant in light of the various corrosive fluids used in the industry such as jet fuel, brake fluid, and the like. It is also desirable that such primers have sufficient flexibility to withstand the severe cold to which the aircraft are exposed. Impact resistance is also desirable and again particularly relevant in light of the noise and vibration to which aircraft are subjected.

### SUMMARY OF THE INVENTION

The present invention is directed to an epoxy functional extended urethane and its use in a two-component epoxy/amine primer system. The primer formulated with the epoxy functional extended urethane has improved flexibility, impact resistance and/or chemical resistance as compared with other epoxy-amine primers. Significantly, one or more of these improved properties are observed with the present primers without detriment to any other desired properties. Also, the epoxy functional extended urethane formulation has a relatively low volatile organic content ("VOC") yet has a viscosity that allows the product to be spray applied. This is significant in that other epoxy-amine primers often require significant and undesirable amounts of solvents to achieve sprayability.

### DETAILED DESCRIPTION OF THE INVENTION

The present invention is directed to an epoxy component and to a two-component, or "2K", epoxy-amine primer system comprising an amine component and the epoxy component. The epoxy component further comprises an epoxy functional extended urethane. '

As used herein, the term "epoxy functional extended urethane" and like terms refers to epoxy functional urethanes formed from the reaction of a polyepoxy that has undergone chain extension with a compound comprising hydroxyl groups; some of the hydroxyl groups resulting from the epoxy ring opening are subsequently reacted with a polyisocyanate, which serves to link the chain extended polyepoxy molecules. In one embodiment of the invention, the epoxy functional extended urethane comprises the reaction product of a curable resinous polyepoxide comprising a diglycidyl ether of a bisphenol F, a polyhydric organic compound, and then a polyisocyanate. The unreacted epoxy groups of the epoxy functional extended urethane are curable by the amine component of the primer system.

The curable resinous polyepoxides used according to one embodiment of the present invention are typically in a liquid vehicle. Suitable resinous polyepoxides that may be used are diglycidyl ethers of bisphenol F. The curable resinous polyepoxide typically has a molecular weight of 250 to 1500, such as 300 to 550. Such resinous polyepoxides can be prepared by the reaction of epichlorohydrin with a polyhydric organic compound, or can be purchased, for example, from Resolution Products, in their EPON line of products, or Ciba Specialty Chemicals in their ARALDITE line of products. The curable resinous polyepoxide should be chosen to give the epoxy component the desired viscosity without the need for high VOC levels and also any other desired properties, such as flexibility.

The resinous polyepoxides are then chain extended with a polyhydric organic compound. The polyhydric organic compound is typically a polyhydroxy phenol, such as bisphenol A, bisphenol F, trihydroxydiphenol dimethyl methane, 4,4'-dihydroxy biphenyl, ethylene glycol, 2,3-butane diol, erythritol, cresol, and the like. The resinous polyepoxide can be reacted with the polyhydric organic compound by heating the polyepoxide, adding the polyhydric organic compound and a catalyst, and holding the mixture at an elevated temperature until the reaction is effected, such as for several hours. Any phosphonium iodide catalyst can be used, such as ethyltriphenylphosphonium iodide, or triphenyl phosphine. Reaction conditions should be such that hydroxyl groups from the polyhydric organic compounds react with the epoxy groups on the resinous polyepoxide so as to chain extend the resinous polyepoxide. The molar ratio of polyepoxide to polyhydric organic compound is typically 1.0:0.5, such as 1.0:0.2. The resulting intermediate product, a chain extended polyepoxide having reactive hydroxyl groups, typically has a molecular weight of 500 to 4000, such as about 980. Such a molecular weight typically gives the desired viscosity. Again, the polyhydric organic compound can be selected in conjunction with the resinous polyepoxide to give the desired properties such as viscosity and flexibility.

The intermediate product is then further reacted with a polyisocyanate. Generally, this reaction is carried out by adding a polyisocyanate to the cooled intermediate prepared as described above and holding until the reaction is effected, such as for several hours. It will be appreciated that hydroxyl groups on the intermediate product will react with the isocyanate to form urethane linkages. These urethane linkages impart chemical resistance to the epoxy functional extended urethane. Any organic polyisocyanate can be used. For example, aliphatic or aromatic diisocyanates can be used, including toluene diisocyanate ("TDI"), MDI, IPDI, MXDI, TMXDI and the like. In one embodiment of the invention, the polyisocyanate specifically excludes an isocyanate terminated urethane. The molar ratio of the polyhydric organic compound used in forming the intermediate product to polyisocyanate is typically 1.0 to 0.5, such as 1.0 to 0.1. The resulting product, an epoxy functional extended urethane, typically has a molecular weight of 1000 to 3000, such as 1500 to 2200, or about 2100. Higher molecular weights will be achieved upon further chain extension. This isocyanate modified compound is used in the epoxy component of the present 2K primer system. The molar ratio of curable resinous polyepoxide to polyhydric organic compound to polyisocyanate can be 35-50:4-12:0.5-1.5, such as about 42:8:1.

The epoxy component typically also comprises a liquid vehicle, such as an organic solvent; suitable examples include butylacetate and isopropyl alcohol, OXSOL 100, xylene, butanol, and the like. The epoxy component may comprise from 10 to 30 percent epoxy functional extended urethane, such as 20 percent, and 90 to 70 percent solvent and/or other components as described below. In one embodiment, the solvent content of the epoxy component is 60 percent or less.

The other component of the 2K primer system of the present invention is an amine component. The amine component should contain a plurality of amino hydrogen atoms in order to effect cure with the epoxy. Numerous amines are suitable for this purpose, such as aliphatic and cycloaliphatic amines; examples include diethylene triamine and triethylene tetraamine. Aromatic amines, such as methylene dianiline, can also be used as can amidoamines or polyamides. The amine component also typically comprises a liquid vehicle, such as an organic solvent; suitable examples include those listed above. The amine component may comprise from 10 to 50 percent amine, and 90 to 50 percent solvent and/or other components as described below.

As will be appreciated by one skilled in the art, the amine component and epoxy component should be mixed at or near the time of use. The mixture has a useful life of several hours before it becomes too viscous to apply. Typically, the 2K epoxy amine primer system of the present invention will comprise the amine component and epoxy component in a one-to-one ratio, or in a ratio of 0.8 to 1.5.

In one embodiment of the invention, either or both of the amine component and epoxy component further comprise a corrosion inhibitor. A particularly suitable corrosion inhibitor is an inorganic, finely divided chromate pigment such as calcium chromate, strontium chromate, red chromate, zinc chromate, magnesium chromate, and barium chromate, alone or in combination. If added to the amine component, and/or epoxy component, the corrosion inhibitor is typically present in an amount of 5 to 50 weight percent of the primer.

In another embodiment of the present invention, either or both of the amine component and epoxy component further comprise one or more siliceous materials. The siliceous material can include, for example, silica, clay, talc, and the like. The average particle size of the siliceous material varies depending on the material chosen, but typically ranges from 0.01 to 20µ. A particularly suitable clay is bentone clay. In yet another embodiment of the invention, one or more siliceous materials are used, and one or more of these materials have been pre-reacted with a polyalkoxysilane or siloxane having at least one active hydrogen atom that is reactive with the epoxy group of the resinous polyepoxide. If added to the epoxy component, the siliceous material(s) are typically present in an amount of about 2.0 to 20 weight percent of the epoxy component; if added to the amine component, the siliceous material(s) are typically present in an amount of about 2.0 to 20 weight percent of the amine component.

Other additives can be included in either or both of the amine component and epoxy component, including pigments, rheological additives, flow additives, and other additives, standard in the art. When used, these additives typically comprise 10 to 50 weight percent of the epoxy and/or the amine component. The amine component can further comprise a catalyst, such as trisdimethylaminophenol; if used, the catalyst is typically needed in amounts of 1 weight percent or less. The epoxy component can further comprise "standard" epoxy materials, such as those available from Resolutia in their EPON line of products; such epoxy can comprise 10 to 50 weight percent of the epoxy component.

The primer can be applied to any suitable substrate and is particularly suitable for aluminum.

The present invention is further directed to an epoxy functional extended urethane as described above. Such an epoxy finds utility not only in the primer system of the present invention but in other coatings as well.

### EXAMPLES

The following examples are intended to illustrate the invention, and should not be construed as limiting the invention in any way.

### Example 1

### Preparation of an Epoxy functional extended urethane

**TABLE 1**

| Raw Material | Weight/Batch | Weight % | Moles |
|---|---|---|---|
| ARALDITE¹ GY 285 | 400 | 70.287 | 1.1940 |
| Bisphenol A | 50 | 8.79 | 0.2193 |
| Ethyltriphenylphosphonium iodide | 0.40 | 0.07 | |
| Butyl acetate | 113.75 | 19.99 | |
| Toluene diisocyanate | 5.0 | 0.88 | 0.0287 |

| | | | |
|---|---|---|---|
| ¹ Epoxy functional Bisphenol F, molecular weight 360, from Ciba Specialty Chemicals. | | | |

The ARALDITE GY 285 was charged to a stainless steel kettle and heated to 110°C (230°F) to remove water. When the water content was less than 0.05 percent, as measured by the Carl Fisher method, the ARALDITE GY 285 was cooled to 96°C (205°F). The bisphenol A and ethyltriphenylphosphonium iodide were added. The mixture was heated to 149°C (300°F) and held for 4 hours, after which time the reactor was cooled to 80°C (176°F). The butyl acetate was charged and mixed for 30 minutes. The toluene diisocyanate was charged and held for 4 hours at 80°C (176°F). When the epoxy equivalent weight (EEW) measured between 250 and 280, the reactor was cooled to 38°C (100°F) and emptied.

### Example 2

### Preparation of Corrosion Inhibitive Primer Using Epoxy Functional Extended Urethane

### Dispersion of fillers in Epoxy Component of the Primer.

A mixture of 162.4 kg (358 pounds) of epoxy functional extended urethane prepared as described in Example 1, 33.1 kg (73 pounds) ethyleneglycolmonoethylether acetate ("EE"), 1.8 kg (4 pounds) bentonite clay were elurried together using high shear. The mixing was continued for 15 minutes. 195.5 kg (431 pounds) of strontium chromate, 34.5 kg (76 pounds) of titanium dioxide, 11.3 kg (25 pounds) of Amsco solvent EE and 59.4 kg (131 pounds) of epoxy functional extended urethane resin were added with stirring. The entire mixture was passed through a media mill and ground until a grind of 7 was obtained. After grinding, the mixture was let down with 49.0 kg (108 pounds) of epoxy functional extended urethane resin, 22.7 kg (50 pounds) of Amsco solvent EE and 18.1 kg (40 pounds) of cyclohexanone.

The curing solution for this was prepared by combining 81.2 kg (179 pounds) of polyamide, EPICURE 3115, a curing agent commercially available from Resolutia, 34.9 kg (77 pounds) of toluene, 110.2 kg (243 pounds) of butanol and 83.5 kg (184 pounds) of amino silane. The mix ratio for the two components described above is 1.5 parts of epoxy functional extended urethane to one part of amine curing solution by volume.

The components were mixed by shaking in a sealed can and applied to aluminum test panels by spray application using conventional pressure pot equipment or HVLP equipment. Application thickness was 15.24 - 22.86 µm (0.6-0.9 mils). The flexibility of the primer was evaluated by spray application of the mixed material onto 508 µm (20 mil) thick to aluminum panels. The panels were air dried for 14 days or cured for 24 hours at 66°C (150°F). The panel was placed on a GE Impact Tester. The primer described above exhibits greater than 20 percent elongation when tested as above. This primer also exhibits good resistance to oils and fuel, does not blush and exhibits good adhesion.

### Dispersion of Fillers in Amine Component of Product

83.9 kg (185 pounds) of polyamide, 74.8 kg (165 pounds) butanol, 163.3 kg (360 pounds) strontium chromate, 8.2 kg (18 pounds) carbon black, 5.4 kg (12 pounds) flatting powder, 49.0 kg (108 pounds) xylene, 133.4 kg (294 pounds) silica were combined with stirring. The entire mixture was passed through a media mill until a grind of 6+ was obtained. The material was let down with an additional 31.8 kg (70 pounds) of butanol.

The activator component was prepared by combining 187.8 kg (414 pounds) OXSOL 100, a solvent commercially available from Isle Chem 16.3 kg (36 pounds) EPON 828, an epoxy commercially available from Resolutia 233.1 kg (514 pounds) epoxy functional extended urethane resin prepared according to Example 1, and 9 pounds epoxy silane commercially available from Witco as SILQUEST A-187. The entire mixture was stirred with a high speed dispersion blade while maintaining the temperature below 32°C (90°F).

The activator component can be combined with the amine component in a ratio of 1:1 by volume. The elongation of this primer when measured by the GE Impact was greater than 20 percent. In contrast, when the activator consists only of Epon 828, the flexibility of the primer was less than 10 percent. This primer exhibits good resistance to oils and fuels, does not blush and exhibits good adhesion.

## Claims

1. An epoxy component, wherein the epoxy component comprises an epoxy functional extended urethane which comprises the reaction product of:
a) a curable resinous polyepoxide comprising a diglycidyl ether of a bisphenol F;
b) a polyhydric organic compound; and then
c) a polyisocyanate.

2. The epoxy component of Claim 1, wherein the molecular weight of the resinous polyepoxide is 360 to 550.

3. The epoxy component of Claim 1, wherein the molecular weight of the epoxy functional extended urethane is 1500 to 2200.

4. The epoxy component of Claim 1, wherein the polyisocyanate is toluene diisocyanate.

5. The epoxy component of Claim 1, wherein the molar ratio of a:b:c is 35-50:4-12:0.5-1.5.

6. The epoxy component of Claim 1, wherein the curable resinous polyepoxide comprises the diglycidyl ether of Bisphenol F, the polyhydric organic compound comprises Bisphenol A, and the polyisocyanate comprises toluene diisocyanate, and the ratio of a:b:c is 35-50:4-12:0.5-1.5.

7. A two-component epoxy amine primer system comprising:
an amine component; and
an epoxy component as specified in any of the claims 1 to 6.

8. The system of Claim 7, wherein the amine component comprises an aliphatic amine.

9. The system of Claim 7, wherein the amine component and/or an epoxy component further comprises one or more corrosion inhibitors, and/or one or more siliceous materials, and/or mixtures thereof.

10. The system of Claim 9, wherein the corrosion inhibitor comprises chromate.

11. The system of Claim 10, wherein the chromate comprises strontium chromate.

12. The system of Claim 9, wherein the siliceous material comprises a combination of silica and clay.

13. The system of Claim 12, wherein the clay comprises bentone clay.

## Patentansprüche

1. Epoxykomponente, wobei die Epoxykomponente ein epoxyfunktionelles verlängertes Urethan enthält, welches das Reaktionsprodukt aus:
a) einem härtbaren harzartigen Polyepoxid, das einen Diglycidylether von Bisphenol F enthält,
b) einer organischen Polyhydroxyverbindung und dann
c) einem Polyisocyanat
enthält.

2. Epoxykomponente nach Anspruch 1, wobei das Molekulargewicht des harzartigen Polyepoxids 360 bis 550 beträgt.

3. Epoxykomponente nach Anspruch 1, wobei das Molekulargewicht des epoxyfunktionellen verlängerten Urethans 1500 bis 2200 beträgt.

4. Epoxykomponente nach Anspruch 1, wobei das Polyisocyanat Toluoldiisocyanat ist.

5. Epoxykomponente nach Anspruch 1, wobei das Molverhältnis von a:b:c gleich 35-50:4-12:0,5-1,5 ist.

6. Epoxykomponente nach Anspruch 1, wobei das härtbare harzartige Polyepoxid den Diglycidylether von Bisphenol F enthält, die organische Polyhydroxyverbindung Bisphenol A enthält und das Polyisocyanat Toluoldiisocyanat enthält und das Verhältnis von a:b:c gleich 35-50:4-12:0,5-1,5 ist.

7. Ein zweiteiliges Epoxy/Amin-Primersystem, enthaltend:
eine Aminkomponente und
eine Epoxykomponente wie in einem der Ansprüche 1 bis 6 spezifiziert.

8. System nach Anspruch 7, wobei die Aminkomponente ein aliphatisches Amin enthält.

9. System nach Anspruch 7, wobei die Aminkomponente und/oder eine Epoxykomponente ferner einen oder mehrere Korrosionsinhibitoren und/oder einen oder mehrere siliciumdioxidhaltige Stoffe und/oder Mischungen davon enthält.

10. System nach Anspruch 9, wobei der Korrosionsinhibitor Chromat enthält.

11. System nach Anspruch 10, wobei das Chromat Strontiumchromat enthält.

12. System nach Anspruch 9, wobei der siliciumdioxidhaltige Stoff eine Kombination von Siliciumdioxid und Ton enthält.

13. System nach Anspruch 12, wobei der Ton Bentonit enthält.

## Revendications

1. Composant époxy, dans lequel le composant époxy comprend un uréthanne étendu à fonction époxy qui comprend le produit de la réaction d'un :
a) polyépoxyde résineux durcissable comprenant un éther diglycidylique de bisphénol F ;
b) composé organique polyhydrique ; et puis
c) polyisocyanate.

2. Composant époxy selon la revendication 1, dans lequel le poids moléculaire du polyépoxyde résineux est de 360 à 550.

3. Composé époxy selon la revendication 1, dans lequel le poids moléculaire de l'uréthanne étendu à fonction époxy est de 1500 à 2200.

4. Composé époxy selon la revendication 1, dans lequel le polyisocyanate est un toluène diisocyanate.

5. Composé époxy selon la revendication 1, dans lequel le rapport molaire de a:b:c est de 35-50:4-12:0,5-1,5.

6. Composé époxy selon la revendication 1, dans lequel le polyépoxyde résineux durcissable comprend l'éther diglycidylique de bisphénol F, le composé organique polyhydrique comprend le bisphénol A, et le polyisocyanate comprend le toluène diisocyanate, et le rapport de a:b:c est de 35-50:4-12:0,5-1,5.

7. Système d'accrochage époxy amine à deux composants comprenant :
un composant d'amine ; et
un composant époxy tel que spécifié dans l'une quelconque des revendications 1 à 6.

8. Système selon la revendication 7, dans lequel le composant d'amine comprend une amine aliphatique.

9. Système selon la revendication 7, dans lequel le composant d'amine et/ou un composant époxy comprend, en outre, un ou plusieurs inhibiteurs de corrosion, et/ou un ou plusieurs matériaux siliceux, et/ou des mélanges de ceux-ci.

10. Système selon la revendication 9, dans lequel l'inhibiteur de corrosion comprend un chromate.

11. Système selon la revendication 10, dans lequel le chromate comprend le chromate de strontium.

12. Système selon la revendication 9, dans lequel le matériau siliceux comprend une combinaison de silice et d'argile.

13. Système selon la revendication 12, dans lequel l'argile comprend une argile bentone.
